Europäisches Patentamt

European Patent Office

Office européen des brevets

(11) Publication number: **0 257 840 B1**

# EUROPEAN PATENT SPECIFICATION

(45) Date of publication of patent specification: **18.12.91**  (51) Int. Cl.5: **F23L 15/02, F27D 23/00**

(21) Application number: 87306841.5

(22) Date of filing: 31.07.87

(54) Burner.

(30) Priority: 02.08.86 GB 8618924

(43) Date of publication of application:
02.03.88 Bulletin 88/09

(45) Publication of the grant of the patent:
18.12.91 Bulletin 91/51

(84) Designated Contracting States:
AT BE CH DE ES FR GB GR IT LI LU NL SE

(56) References cited:
EP-A- 0 111 382
US-A- 4 355 973

(73) Proprietor: STORDY COMBUSTION ENGINEER-
ING LIMITED
Heath Mill Road Wombourne
Wolverhampton West Midlands. WV5
8BD(GB)

(72) Inventor: Wills Brian
"Sandbourne" Stone Lane
Kinver West Midlands(GB)

(74) Representative: Lewis, Samuel Hewitt et al
FORRESTER & BOEHMERT Widenmayer-
strasse 4/I
W-8000 München 22(DE)

## Description

The present invention relates to a burner in or for use in a furnace, the burner defining separate paths for leading fuel and air to a mixing position and defining a path along which there can be viewed a flame extending from the mixing position into a heating chamber of the furnace, when the burner is in use, wherein the burner incorporates heat storage means contained in a chamber which forms a part of the air path, wherein the burner comprises a housing which is specific to the burner and wherein the housing is mounted on or is suitable for mouting on a wall of the furnace.

In a burner intended for supplying heat to a heating chamber of a furnace, it is generally necessary to provide access through the burner to the mixing position for services additional to the fuel and air supply. Such additional services include an ignition device, flame-detection means and a pilot burner fuel supply.

An example of a burner which defines separate paths for leading fuel and air to a mixing position and which defines a path along which there can be viewed a flame extending from the mixing position is disclosed in EP 111382A. This published specification discloses mounting of the burner on a wall of the furnace with the mixing position lying within an opening in that wall. The published specification further discloses a housing containing a heat storage means, the housing of the heat storage means being bolted to a housing of the burner so that the heat storage means extends from the burner in a direction away from the furnace wall.

The heat storage means associated with the burner disclosed in EP 111382 is spaced a considerable distance from the mixing position. In the region between the mixing position and the heat storage means, there is defined by a body of the burner a bore which is inclined at an angle in the region of $45°$ to a longitudinal axis of the burner. A tube extends from the housing of the burner in alignment with the bore and the tube is provided with a sight glass. A partial view of the mixing position can be obtained through the tube and the bore. It is necessary for the bore to be inclined to the longitudinal axis of the burner at an angle which is not significantly greater than $45°$, in order that a part of the flame can be viewed, when the burner is in operation. This necessitates spacing of the heat storage means a substantial distance from the mixing position, in order to accommodate the inclined bore between them.

According to the present invention, there is provided a burner comprising a housing, inside which there are defined respective paths for the flow of fuel and air to a mixing position, wherein the air flow path includes a chamber within the housing, characterised in that the chamber and the mixing position are separated by a permeable wall defining an end of the chamber and in that the chamber is upstream of the mixing position and contains a permeable heat storage mass to form a bed in the chamber.

The heat storage mass may occupy the chamber in such a way that the heat storage mass is substantially immediately adjacent to the mixing position. This arrangement provides a burner which is more compact than is a structure as disclosed in EP 111382A, intended for the same duty. It will be understood that, if the burner has a large bulk protruding from the furnace wall, this can be inconvenient, and in some situations, installation of the burner may be impossible. Furthermore, the smaller structure constituted by a burner having this preferred feature will generally be less massive than is the known structure. The mass of the burner affects considerably the ease of installation and removal of the burner.

In a burner in accordance with the present invention, said wall may be constructed as a flame stabiliser and the mixing position may be spaced from the heat storage means only by the flame stabiliser.

The burner preferably defines a space which extends through the heat storage means from the mixing position to a position outside the housing of the burner. The fuel flow path may include a fuel supply pipe which extends along this space. In this case, the fuel supply pipe preferably occupies a part only of the transverse cross-section of the space. With this arrangement, the remainder of the space is available to contain other services, for example flame-detection means, a fuel supply for a pilot flame and an ignition device. Furthermore, the remainder of the space can provide a substantially axial view of the flame and can direct to the mixing position a supply of air which does not pass through the heat storage means. An axial view of a flame provides information which is different from that provided by a transverse view, as provided in the structure disclosed in EP 111382A.

The heat storage mass in the chamber preferably comprises a bed composed of a loose collection of separately formed bodies. In this case, the size of the bodies preferably varies in a direction along the airflow path. For example, the heat storage bodies immediately adjacent to the mixing position may be larger than the heat storage bodies which occupy a part of the chamber remote from the mixing position. By a bed, is meant herein a collection of distinct elements, each of which is small, as compared with the size of the bed.

The chamber is preferably elongated, being arranged with its length extending along the length of the fuel flow path and along the flame axis of the burner. The wall which separates the chamber from the mixing position can be robust. In a case where the wall will be subjected to temperatures not significantly above 1000° C, the wall may be metallic. In cases where the wall is to be subjected to much higher temperatures, the wall can be formed of ceramic materials and can have whatever thickness is necessary to provide the desired strength. Even when the wall is thick, the wall can be constructed to impose only a very low pressure drop on gases flowing through the openings defined by the wall. Gases flowing through the chamber are preferably directed along the chamber. This provides a relatively long flowpath within the chamber and enables a relatively long cycle time to be used.

For use, the burner is preferably mounted in the wall of a furnace to communicate with the interior of the furnace through an opening defined in the wall of the furnace, the chamber being disposed at the outside of the furnace wall. The mixing position also may be outside the furnace wall.

An example of a furnace which includes two burners embodying the invention will now be described, with reference to the accompanying drawings, wherein:-

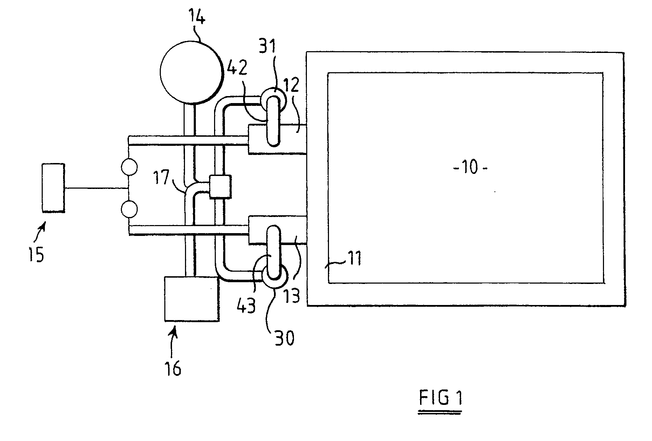

FIGURE 1 shows a diagrammatic representation of the furnace, burners and associated equipment;

FIGURE 2 shows diagrammatically a cross-section through one of the burners and an adjacent part of the furnace; and

FIGURE 3 shows certain details of the burner of Figure 2.

The furnace includes walls defining a chamber 10 within which workpieces or materials are to be heated. The furnace includes an entrance and means may be provided for introducing workpieces or materials into the chamber 10 and transferring workpieces or materials out of the chamber 10. However, as these details form no part of the present invention, they are not represented in the drawing. One of the walls, 11, defines two openings and there are mounted on the wall 11, partly lying outside the furnace, respective burners 12 and 13 which communicate with the chamber 10 through these openings. The burners are operated alternately in a cyclical manner. During a first half of each cycle, fuel and air are supplied separately to the burner 12, are mixed by the burner and burn as they are discharged from the burner through the opening in the wall 11 into the chamber 10. Hot products of combustion pass from the chamber 10 through the burner 13 and associated heat storage means 30 to a flue 14. Heat is extracted from the products of combustion and stored in the burner 13 and the heat storage means 30 so that the products of combustion discharged to the flue are cool, relative to the products of combustion in the chamber 10 during steady-state operation. Typically, the temperature of the gases in the chamber 10 may be within the range 800° to 1400° C; whereas the temperature of the gases leaving the burner 13 may be in the range 500° to 700° C and the temperature of the gases leaving the heat storage means 30 may be in the range 100° to 200° C. During the second half of the cycle, air and fuel are supplied separately to the burner 13. The air is heated in the heat storage means and in the burner from ambient temperature to a temperature which is typically within the range 700° to 1200° C, before being mixed in the burner 13 with the fuel. The fuel and hot air burn as they pass from the burner into the chamber 10 and the hot products of combustion are withdrawn from the chamber through the burner 12. During the second half of the cycle, the burner 12 and heat storage means 31 associated therewith extract heat from the products of combustion, before these are discharged to the flue 14.

For supplying fuel to the burners alternately, there is provided fuel supply means indicated by the reference number 15. The fuel is typically natural gas and the supply means 15 may include a gas main and valves for controlling the flow of gas from the main to each of the burners.

For supplying air alternately to the burners, there is provided air supply means identified by the reference numeral 16. The air supply means includes a fan and one or more valves associated with the burners 12 and 13 for directing air from the fan to one of the burners and directing products of combustion from the other of the burners to the flue 14. A further fan (not shown) may be provided upstream of the flue 14.

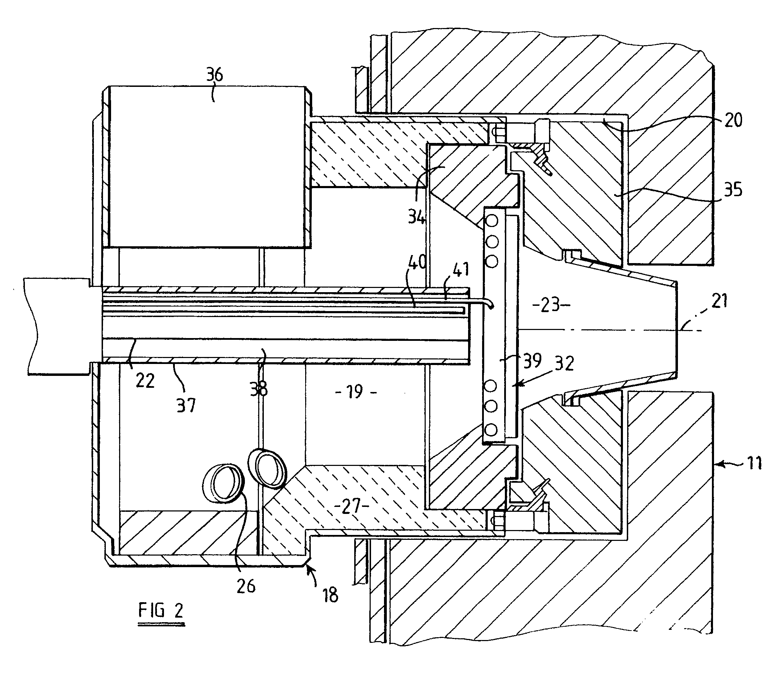

The structure of the burner 12 is illustrated in more detail in figure 2. The burner includes a housing 18 which is disposed partly within and partly outside the furnace wall 11 and which is attached to that wall. Within the housing 18, there is defined an annular chamber 19 which is in co-axial relation with a circular opening 20 defined by the wall 11. The axis of the chamber 19 is represented at 21 in figure 2 and is typically perpendicular to the external surface of the wall 11.

At the centre of the annular chamber 19, there is fuel pipe 22 defining a fuel-flow path from the fuel supply means 15 to a mixing position 23 which lies outside the pipe 22, beyond the free-end thereof.

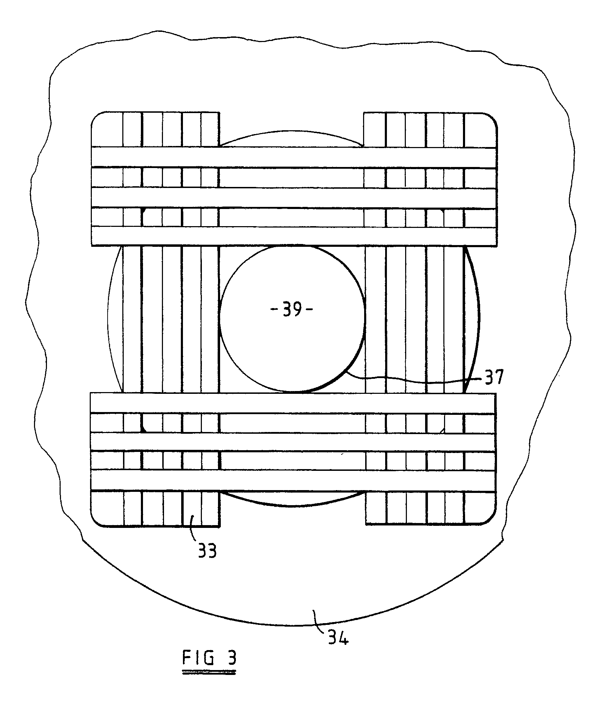

At the end of the chamber 19 which is adjacent to the free-end of the pipe 22, the chamber is separated from the mixing position 23 by an array 32 of rods which collectively form a permeable wall defining one end of the chamber. The array comprises two layers of rods, the rods of a first of the layers being parallel to one another and the rods of the second layer being parallel to one another and perpendicular to the rods of the first layer. All of the rods are perpendicular to the axis 21 as shown in Figure 3, there are defined between the rods gaps 33 through which gases can flow without significant resistance. Opposite end portions of each rod are seated in an annular recess defined by an annular block 34 at the periphery of the chamber 19. Spacers are interposed between the corresponding end portions of mutually adjacent rods to maintain the gaps 33 and the assembly of rods and spacers is held in the recess of the block 34 by a gasket and a further block 35. The rods of the array 32 are preferably formed of a ceramic material. It will be understood that other forms of permeable wall structure may be substituted for the array 32. In place of solid rods, there may be provided tubular members. The wall is transverse to the axis 21 in each case.

The chamber 19 contains a permeable heat storage mass which may be a single body of permeable material but which preferably comprises a number of heat storage bodies 26 which are initially separate from one another but are packed into the chamber 19 to form a bed occupying that chamber substantially entirely, except for interstices between the bodies. Heat storage bodies of the bed rest against the array 32 and against a wall of the housing 18 which defines an opposite end of the bed.

Preferably, the heat storage bodies 26 provided in the chamber 19 adjacent to the array 32 are larger than the heat storage bodies disposed further along the chamber. The heat storage mass may comprise heat storage bodies of two or more different sizes, those of the larger size being generally near to the array 32 and those of the smaller size being spaced from the array. Alternatively, there may be heat storage bodies of a large number of different sizes, the average size in a region adjacent to the array 32 being larger than the average size in a region spaced from the array.

Each of the heat storage bodies 26 is small, as compared with the bed of bodies in the chamber 19. However, the bodies are not so small as to properly be designated particles or grit. Each of the bodies preferably has at least one dimension which exceeds five millimetre.

Since each of the heat storage bodies 26, particularly adjacent to the array 32, is substantially larger than grit, the interstices defined by the array 32 can be quite large. Accordingly, the array does not cause a significant pressure drop in gases flowing through the array. Furthermore, the array is robust and is not prone to blockage by accumulation of foreign matter within the interstices defined by the array. These interstices are preferably at least five millimetre across. Mutually adjacent interstices defined by the array are separated by structural parts of the array and these parts have a width, measured in a direction between the two adjacent interstices, similar to the width of the interstices measured in the same direction.

The thickness of the array 32 between a face of the array presented to the bed of heat storage bodies 26 and an opposite face of the array is in excess of ten millimetre, exceeds the largest dimension of the bodies 26, exceeds the largest dimension of each interstice defined by the array and exceeds the internal diameter of the fuel pipe 22 adjacent to the free-end thereof. The diameter of the chamber 19 where the radially inwardly facing surface of the annular block 34 meets the array 32 is no more than twenty five times the thickness of the array and may be no more than twice the thickness of the array.

The radially inwardly facing surface of the annular block 34 is of conical form, the smaller diameter being immediately adjacent to the array 32 and the larger diameter being spaced away from the array in a direction towards a rear end of the chamber 19 remote from the mixing position 23. The annulus 34 serves partly to support the weight of the heat storage bodies 26 and partly to prevent movement of the heat storage bodies from the chamber 19 in a direction towards the mixing position 23.

The peripheral boundary of the chamber 19 is defined by a refractory lining 27 inside the housing 18. A layer of this lining which is nearer to the axis 21 is preferably formed of a fibrous material. To reduce the risk of the fibrous material being compressed excessively by the load imposed by the refractory bodies 26, there is provided a hollow, impermeable support 37 which defines the radially innermost boundary of the chamber 19 and is therefore surrounded by the bed of refractory bodies. The support 37 may be cylindrical and is preferably co-axial with the fuel pipe 22. The internal diameter of the support 37 is substantially greater, preferably a plurality of times greater, than the external diameter of the fuel pipe 22 so that there is between the fuel pipe and the support an annular space 38. At least when the burner is operating in the fire mode, a flow of air may be directed along the annular space 38 towards the mixing position 23 to extract heat from the fuel pipe 22 and/or to reduce the flow of heat to that fuel pipe through the support 37. The support 37 is impermeable to gases. Bodies 26 rest on the support.

The support 37 approaches sufficiently closely to the array 32 to prevent refractory bodies 26 escaping from the chamber 19 in a direction towards the mixing position 23. It will be noted that there is at the centre of the array 32 an unobstructed space 39 having a width approximately equal to the outside diameter of the support 37. The fuel pipe 22, or a nozzle provided thereon, may extend through the space 39 to the mixing position, into, but not completely through this space, or may terminate at the side of the array 32 remote from the mixing position. It will be noted that the array 32 is separate from the support 37 and from the fuel pipe 22. The support 37 is preferably spaced from the array 32 in a direction along the axis 21. However, it would be within the scope of the invention for an end portion of the support 37 to extend into the space 39.

A pilot burner and associated fuel-supply line 40 extends along the annular space 38 and terminates at a position outside the fuel pipe 22 but just inside the tube 37. Adjacent to the pilot burner, there is provided a flame-detection device 41 and connection means connecting the flame-detection device with control means of the burners also extends along the annular space 38. Additional sensing and control devices can be accommodated in the space 38, at the inside of the hollow support 37.

The heat storage means 31 may be constructed and arranged in a known manner and comprises a further mass of refractory bodies in a thermally insulated container. The container is spaced somewhat from the burner 12 and is connected with the inlet 36 of the burner by a thermally insulated duct 42.

The structure of the burner 13 may be identical with that of the burner illustrated in figures 2 and 3. The heat storage means 30 is connected with the burner 13 by a thermally insulated duct 43 and the heat storage means 30 may be identical with the heat storage means 31.

When hot products of combustion are flowing from the furnace chamber 10 through the burner 12 to the flue 14, the fuel flowpath through that burner is closed by the fuel supply means 15 and the products of combustion which enter the burner from the opening 20 pass through the array 32 into the chamber 19. In the chamber 19, heat is transferred from the products of combustion to the heat storage mass so that the products of combustion are considerably cooler, when they flow from the chamber 19 into the duct 42, than when they flow into the chamber 19. The peripheral boundary of the chamber 19 is preferably tapered towards the inlet 36, to reduce the cross-sectional area of the airflow path in a direction from the array 32 towards the inlet, so that the velocity of the products of combustion does not fall unduly as the temperature falls. The arrangement is such that the velocity of the products of combustion in the chamber 19 is maintained at a sufficiently high value to achieve good heat transfer to the heat storage mass.

The products of combustion flow through the inlet 36 in a direction away from the axis 21. It will be noted that the inlet extends towards the axis to a position nearer to that axis than the peripheral boundary of the chamber 19 but does not extend to the axis. Surprisingly, the flow of products of combustion is distributed substantially evenly throughout the bed of refractory bodies 26. Similarly, when combustion air enters the burner through the inlet 36, the flow of combustion air through the bed of refractory bodies 26 is distributed more or less evenly throughout the bed. The flow of air through the chamber 19 and the flow of products of combustion through that chamber are generally in axial directions. The air flow leaves that chamber and the products of combustion enter that chamber also in generally axial directions.

It will be noted that the fuel pipe 22 is shielded by the hollow support 37 from direct contact with the hot products of combustion flowing through the chamber 19 when products of combustion are discharged from the chamber 10 through the burner 12.

The products of combustion flow from the burner 12 through the duct 42 to the heat storage means 31, where the products of combustion are further cooled and the heat extracted from the products of combustion is stored in the heat storage bodies. Of the total heat stored in the heat storage bodies in the burner 12 and in the heat storage means 31 the proportion which is stored in the burner is preferably at least one tenth and more preferably exceeds one fifth and is typically one half.

When air and fuel are being supplied through the burner 12, fuel flows from the fuel supply means 15 along the fuel pipe 22 and is discharged from that pipe at the mixing position 23, which is disposed within the housing 18. Air at approximately ambient temperature is supplied through the heat storage means 31 to the chamber 19 of the burner, being heated in the heat storage means and further heated in the chamber 19 so that the temperature of the air discharged from the chamber 19 through the array 32 to the mixing position 23 is fairly high, initially being within about 200° of the temperature at which products of combustion leave the chamber 10. It will be understood that the temperature of the air discharged at the mixing position falls as the cycle proceeds and heat is extracted from the heat storage bodies.

Flow of air through the array 32 promotes turbulence of that flow at the mixing position. The array stabilizes a flame at the mixing position. To further promote mixing of the fuel and air at the mixing position, there may be provided at the free-end of the fuel pipe 22 a helical or other vane or a nozzle for causing turbulence of the fuel and air flows.

If foreign matter accummulates on the heat storage bodies 26 in the burner, it will be necessary to clean or replace these heat storage bodies. For this purpose, the burner may be constructed to permit removal of the heat storage bodies from the burner whilst the burner remains mounted on the furnace wall 11. Alternatively, the burner may be demounted and the bodies removed from the chamber 10 at the end thereof which is adjacent to the mixing position. It will be noted that foreign matter will accummulate on the heat storage bodies in the burner, rather than on heat storage bodies in the heat storage means 31 and that cleaning or replacement of all of the heat storage bodies provided will not generally be necessary.

The apparatus illustrated in the accompanying drawing may be modified so that the air inlet 36 extends through the circumferential wall of the chamber 19 and through the lining but merges smoothly with the surface of the lining which is nearest to the axis 21 so that the air inlet does not lie significantly nearer to that axis than is the lining. The end portion of the air inlet nearer to the axis may be outwardly flared, to promote distribution of the flow throughout the chamber. The air inlet, as viewed in a direction towards the axis 21, may be circular, square or otherwise rectangular. A layer of expanded metal may be present around the circumference of the bed of heat storage bodies 26. Such a layer distributes over the lining pressure exerted by the bodies 26 and prevents those bodies leaving the chamber through the air inlet, during transport of the burner to the place of use.

The period occupied by a complete cycle of operation, that is operation of each burner in the fire mode and in the flue mode, is preferably at least thirty seconds. More preferably, the period during which fuel is supplied continuously to one of the burners when that burner is operating in the fire mode is at least thirty seconds so that a complete cycle will occupy a period in excess of one minute.

The apparatus illustrated in the accompanying drawing may be modified by omission of the heat storage means 30, the duct 43, the heat storage means 31 and the duct 42. In this case, the heat storage means is contained entirely within the burners and only parts of the furnace and parts of the burners are exposed to high temperatures. In this modified version of the apparatus, there are no ducts, valves or joints outside the burners which are subjected to temperatures similar to those attained in the furnace chamber 10.

## Claims

1. A burner comprising a housing (18), inside which there are defined respective paths for the flow of fuel and air to a mixing position (23), wherein the air flow path includes a chamber (19) within the housing, characterised in that the chamber and the mixing position are separated by a permeable wall (32) defining an end of the chamber, that the chamber is upstream of the mixing position (23) and contains a permeable heat storage mass to form a bed in the chamber.

2. A burner according to Claim 1 wherein the heat storage mass (26) occupies the chamber 19 so that said mass is substantially immediately adjacent to the mixing position (23).

3. A burner according to Claim 1 wherein the permeable wall (32) is constructed as a flame stabiliser to stabilise a flame at the mixing position (23).

4. A burner according to Claim 3 wherein the air flow path extends through said permeable wall (32).

5. A burner according to Claim 1 wherein said permeable wall is constructed as an array of rods.

6. A burner according to any preceding claim wherein a passage (38) extends through the heat storage mass (26) to a position outside the housing (18) wherein the path for the flow of fuel (22) extends along the passage (38) and wherein the fuel supply pipe occupies a part only of the transverse cross section of the passage.

7. A burner according to Claim 6 further comprising a tubular structure (37) which separates said passage (38) from the heat storage mass (26).

8. A burner according to Claim 7 wherein the heat storage mass (26) comprises a mass of discrete elements, each of which is small, as compared with said chamber, and wherein some of said elements rest on the tubular structure (37).

9. A burner according to Claim 8, wherein some of said elements (26) also rest against the permeable wall (32).

10. A burner according to Claim 8 or Claim 9 wherein said mass of discrete elements (26) includes larger elements disposed near to the mixing position (23) and smaller elements disposed further from the mixing position.

11. A burner according to any one of Claims 8, 9 and 10, wherein there is at the centre of said permeable wall (32) a space which forms a part of the fuel flow path and wherein said tubular structure (37) and said permeable wall (32) are collectively arranged to exclude the heat storage elements (26) from said space.

12. A burner according to any preceding claim further comprising a frusto-conical wall portion defining a part of the peripheral boundary of said chamber (19) adjacent to the mixing position (23) and wherein said frusto-conical wall portion has a larger diameter further from the mixing position (23) and a smaller diameter nearer to the mixing position.

13. A burner according to Claim 5 further comprising a first annular body defining an opening through which the burning mixture of fuel and air is directed from the mixing position when the burner is firing and a second annular body at the periphery of said chamber, wherein the permeable wall (32) is trapped between said annular bodies, the first annular body is attached to the housing (18) and the second annular body is disposed within the housing.

## Revendications

1. Un brûleur comprenant un carter (18), à l'intérieur duquel sont définis des passages respectifs pour l'écoulement du combustible et celui de l'air vers une zone de mélange (23), le trajet de l'air comprenant une chambre (19) à l'intérieur du carter, caractérisé en ce que la chambre et la zone de mélange sont séparées par une paroi perméable (32) définissant une extrémité de la chambre, en ce que la chambre est en amont de la zone de mélange (23) et contient une masse perméable d'accumulation de chaleur pour former un lit dans la chambre.

2. Un brûleur selon la revendication 1, dans lequel la masse d'accumulation de chaleur (26) occupe la chambre (19) de sorte que ladite masse soit disposée sensiblement de façon immédiatement adjacente à la zone de mélange (23).

3. Un brûleur selon la revendication 1, dans lequel la paroi perméable (32) est construite comme un stabilisateur de flamme, pour stabiliser une flamme dans la zone de mélange (23).

4. Un brûleur selon la revendication 3, dans lequel le trajet d'écoulement d'air se fait à travers ladite paroi perméable (32).

5. Un brûleur selon la revendication 1, dans lequel ladite paroi perméable est construite comme un agencement de barres.

6. Un brûleur selon l'une quelconque des revendications précédentes, dans lequel un passage (38) s'étend à travers la masse d'accumulation de chaleur (26) vers une zone extérieure au carter (18), le passage pour le combustible (22) se faisant le long du passage (38) tandis que la conduite d'alimentation en combustible occupe seulement une partie de la section transversale du passage.

7. Un brûleur selon la revendication 6, comprenant en outre une construction tubulaire (37) qui sépare ledit passage (38) de la masse d'accumulation de chaleur (26).

8. Un brûleur selon la revendication 7, dans lequel la masse d'accumulation de chaleur (26) comprend une masse d'éléments discrets, dont chacun présente une faible dimension, comparé à ladite chambre, et dans lequel certains desdits éléments reposent dans la construction tubulaire (37).

9. Un brûleur selon la revendication 8, dans lequel certains desdits éléments (26) prennent aussi appui contre la paroi perméable (32).

10. Un brûleur selon la revendication 8 ou la revendication 9, dans lequel ladite masse d'éléments discrets (26) comprend des éléments de plus grande taille disposés près de la zone de mélange (23) et des éléments de plus petite taille disposés plus loin de la zone de mélange.

11. Un brûleur selon l'une quelconque des revendications 8, 9 et 10, dans lequel il y a, au centre de ladite paroi perméable (32), un espace qui forme une partie du passage pour l'écoulement du combustible et dans lequel ladite construction tubulaire (37) et ladite paroi perméable (32) sont disposées collectivement pour exclure les éléments d'accumulation de chaleur (62) dudit espace.

12. Un brûleur selon l'une quelconque des revendications précédentes, comprenant en outre une partie de paroi ayant une forme tronconique définissant une partie de la frontière périphérique de ladite chambre (19) adjacente à la zone de mélange (23) et dans lequel ladite partie tronconique de paroi a un plus grand diamètre plus loin de la zone de mélange (23) et un plus petit diamètre plus près de la zone de mélange.

13. Un brûleur selon la revendication 5, comprenant en outre un premier corps annulaire définissant une ouverture à travers laquelle le mélange brûlant de combustible et d'air sont dirigés depuis la zone de mélange lorsque le brûleur est allumé et comprenant un deuxième corps annulaire à la périphérie de ladite chambre, la paroi perméable (32) étant enfermée entre lesdits corps annulaires, avec le premier corps annulaire qui est attaché au carter (18) et le second corps annulaire qui est disposé à l'intérieur du carter.

## Patentansprüche

1. Brenner, mit einem Gehäuse (18), innerhalb dessen jeweils Wege für den Fluß von Brennstoff und Luft zu einem Mischort (23) definiert sind, wobei der Luftflußweg eine Kammer (19) in dem Gehäuse umfaßt, dadurch gekennzeichnet, daß die Kammer und der Mischort durch eine permeable Wand (32), welche ein Ende der Kammer definiert, getrennt sind, daß die Kammer stromaufwärts des Mischortes (23) liegt und eine permeable Wärmespeichermasse enthält, welche ein Bett in der Kammer bildet.

2. Brenner nach Anspruch 1, bei dem die Wärmespeichermasse (26) die Kammer (19) so belegt, das die Masse im wesentlichen unmittelbar dem Mischort (23) benachbart ist.

3. Brenner nach Anspruch 1, bei dem die permeable Wand (32) als ein Flammenstabilisator zum Stabilisieren einer Flamme an dem Mischort (23) aufgebaut ist.

4. Brenner nach Anspruch 3, bei dem der Luftflußweg sich durch die permeable Wand (32) erstreckt.

5. Brenner nach Anspruch 1, bei dem die permeable Wand als eine Gruppe von Stangen ausgebildet ist.

6. Brenner nach einem der vorangehenden Ansprüche, bei dem sich ein Durchlaß (38) durch die Wärmespeichermasse (26) zu einem Ort außerhalb des Gehäuses (18) erstreckt, bei dem der Weg für den Fluß des Brennstoffes (22) sich entlang des Durchlasses (38) erstreckt und bei dem das Brennstoffzufuhrrohr ein Teil nur des Querschnitts des Durchlasses besetzt.

7. Brenner nach Anspruch 6, welcher weiterhin eine röhrenförmige Struktur (37) umfaßt, die den Durchlaß (38) von der Wärmespeichermasse (26) trennt.

8. Brenner nach Anspruch 7, bei dem die Wärmespeichermasse (27) eine Masse diskreter Elemente aufweist, von denen jedes im Vergleich mit der Kammer klein ist, und bei dem einige der Elemente auf der röhrenförmigen Struktur (37) ruhen.

9. Brenner nach Anspruch 8, bei dem einige der Elemente (26) auch gegen die permeable Wand (32) gelegt sind.

10. Brenner nach Anspruch 8 oder Anspruch 9, bei dem die Masse diskreter Elemente (26) größere Elemente, die nahe am Mischort (23) angeordnet sind, und kleinere Elemente, die weiter entfernt vom Mischort angeordnet sind, umfaßt.

11. Brenner nach einem der Ansprüche 8, 9 und 10, bei dem im Zentrum der permeablen Wand (32) ein freier Raum vorliegt, der einen Teil des Brennstoffflußweges bildet, und bei dem die röhrenförmige Struktur (37) und die permeable Wand (32) zusammen angeordnet sind, um die Wärmespeicherelemente (26) aus dem freien Raum ausgeschlossen zu halten.

12. Brenner nach einem der vorangehenden Ansprüche, welcher weiterhin einen kegelstumpfförmigen Wandabschnitt aufweist, der einen Teil der Unfangsbegrenzung der Kammer (19) benachbart dem Mischort (23) definiert, und bei dem der kegelstumpfförmige Wandabschnitt einen größeren Durchmesser weiter von dem Mischort (23) entfernt und einen kleineren Durchmesser näher an dem Mischort hat.

13. Brenner nach Anspruch 5, welcher weiterhin einen ersten ringförmigen Körper, welcher eine Öffnung definiert, durch die die Brennmischung aus Brennstoff und Luft von dem Mischort geleitet wird, wenn der Brenner brennt, und einen zweiten ringförmigen Körper am Außenumfang der Kammer aufweist, wobei die permeable Wand (32) zwischen den beiden ringförmigen Körpern angeordnet ist, und wobei der erste ringförmige Körper an dem Gehäuse (18) befestigt ist und der zweite ringförmige Körper innerhalb des Gehäuses angeordnet ist.

FIG 1

FIG 2

FIG 3